# FASCICULE DE BREVET EUROPEEN

(11) **EP 0 887 024 B1**
(45) Date de publication et mention de la délivrance du brevet: **26.05.2004**
(21) Numéro de dépôt: 97201916.0
(22) Date de dépôt: 23.06.1997
(51) Int. Cl.: A23L 1/308, A23L 1/0528, A23L 1/29

(54) **Composition nutritive comprenant fibres de pois et inuline**
Erbsenfasern und Inulin enthaltende Nahrungszusammensetzungen
Nutritious composition containing pea fibres and inulin

(43) Date de publication de la demande: 30.12.1998
(73) Titulaire: SOCIETE DES PRODUITS NESTLE S.A., 1800 Vevey (CH)
(72) Inventeur: Brassart, Dominique, CH-1030 Bussigny (CH); Jaussan, Véronique, CH-1110 Morges (CH); Schweizer, Thomas, CH-1052 Le Mont-sur-Lausanne (CH); Brun, Thierry, 14670 Saint-Samson (FR)
(74) Mandataire: Straus, Alexander, Dr. Dipl.-Chem.

(56) Documents cités:
- EP-A- 0 756 828
- WO-A-94/12541
- FR-A- 2 673 360

## Description

La présente invention a pour objet une composition nutritive à base fibres.

Selon un comité d'experts américains (Pilch S.M, Phisiological effects and health consequences of dietary fiber - F.B.A, 223, 84, 2059 - Bethesda, MD Federation of American Societies for Experimental Biol., 1987), dans la ration alimentaire journalière d'une personne en bonne santé, la quantité de fibres alimentaires doit être de l'ordre de 27 à 40 g.

Les fibres alimentaires peuvent être classées notamment selon leurs propriétés et leurs structures chimiques et physiques, selon leur digestibilité lors du transit gastro-intestinal ou selon leurs propriétés physiologiques lors du transit gastro-intestinal.

Chimiquement, les fibres alimentaires sont constituées de polysaccharides ou de lignine. Ces composés ne sont pas hydrolysés par les secrétions endogènes, lors du transit gastro-intestinal (T. Schweizer et. al., The physiological and nutritional importance of dietary fibres, Exprientia, 44, p 182-186, 1991).
Les polysaccharides constituant ces fibres alimentaires peuvent être des polysaccharides de membrane de plante, notamment la cellulose, l'hémicellulose ou la pectine, ou d'autres polysaccharides intracellulaires non hydrolysés par les enzymes digestives, tels que l'amidon résistant, les galactomannanes ou l'inuline (Quemener et al., Determination of inuline and oligofructoses in food products and integration in the AOAC methodes for measurement of total dietary fibres, Lebensm. Wiss. u. Technol., 27, p 125-132, 1994).

Selon leurs propriétés biologiques et physico-chimiques, les fibres alimentaires sont classées en deux catégories, les fibres insolubles et les fibres solubles.
Les fibres insolubles, telles que la cellulose, les fibres de maïs ou les fibres insolubles de soja, ont essentiellement un rôle mécanique. Elles sont généralement très peu fermentées par la flore intestinale et contribuent à diminuer la durée du transit intestinal (Scheppach et. al., Addition of dietary fiber to liquid formula diets, JPEN, 14, p 202-209, 1990).
Les fibres solubles, telles que la pectine, l'inuline ou l'amidon résistant, sont un très bon substrat de fermentation pour la flore intestinale. Le produit de cette fermentation est une libération d'acides gras, notamment des acides gras à chaîne courte dans le côlon, ce qui a pour effet de diminuer la valeur du pH dans le côlon et de permettre le contrôle de la croissance et du développement de bactéries pathogènes dans le côlon.

EP 0591267 décrit un système de fibres pour des produits nutritifs comprenant, en masse, 5-50% de gomme arabique, 5-25% de carboxyméthylcellulose sodique et 45-80% de fibres d'enveloppe d'avoine.

Par ailleurs, il a été mis en évidence le fait que l'administration par voie entérale d'une composition dépourvue de fibres alimentaires provoquait chez les patients des troubles intestinaux, tels que la diahrrée ou la constipation (Palacio et. al., Nutrition in clinical practice, 5, p 99-106, 1990).

Ainsi, EP 756828 décrit une composition à base de fibres alimentaires, destinée notamment à la nutrition entérale, permettant de contribuer au maintien d'une bonne fonctionnalité des intestins. Cette composition, qui est sous forme liquide ou sous forme séchée, contient, pour 2000 kcal, 15-50% de fibres alimentaires solubles de polysaccharides, 15-45% de fibres alimentaires insolubles de polysaccharides et 8-70% d'oligosaccharides ou d'amidon résistant. Elle peut également contenir des carbohydrates et/ou de la matière grasse et/ou du matèriel protéique.

La présente invention a pour but de proposer une composition nutritive à base de fibres présentant un bon équilibre dans la proportion des fibres solubles et des fibres insolubles, ayant une viscosité intéressante et une bonne stabilité de conservation. La composition selon la présente invention a, de plus, pour but d'agir sur l'ensemble du système gastro-intestinal, au niveau de l'estomac, du petit intestin et du côlon.

A cet effet, la composition nutritive à base de fibres, selon la présente invention, comprend au moins un mélange de fibres constitué de fibres internes de pois, de fibres d'enveloppe externe de pois et d'inuline.

C'est avec surprise que l'on a constaté que la composition selon la présente invention, qui a l'avantage d'être à base de fibres alimentaires naturelles, a, d'une part, de bonnes propriétés mécaniques, telle que, notamment, la diminution de la durée du transit gastro-intestinal et, d'autre part, de bonnes propriétés nutritionnelles et biologiques, telle que, notamment, la libération d'acides gras à chaîne courte, permettant notamment de maintenir un équilibre bactérien au niveau de la muqueuse intestinale et d'éviter la croissance et le développement de bactéries pathogènes.

Le mélange de fibres, selon la présente invention, contient 20-50% de fibres internes de pois, 20-40% de fibres d'enveloppe externe de pois et 20-60% d'inuline.

Les fibres internes de pois sont des fibres constituées de 15% de cellulose, de 45% d'hémicellulose et de 40% de pectine. Les 66% qui représentent la fraction insoluble, des fibres internes de pois, ont, d'une part, un effet mécanique, en agissant sur la durée du transit gastro-intestinal et, d'autre part, un effet nutritionnel et biologique, puisque ces fibres sont fermentées par la flore intestinale et permettent la libération d'acides gras à chaîne courte. La libération de ces acides gras à chaîne courte, provoque l'abaissement de la valeur du pH dans le côlon et, de ce fait, la diminution de la croissance et du développement des souches pathogènes dans le côlon. La libération d'acides gras a une grande importance sur la complémentation avec les antibiotiques, car, au cours d'un traitement antibiotique, la flore intestinale ne remplit plus ses fonctions et une alimentation riche en fibres, présentant une fraction soluble, permet de pallier à ce problème. Par ailleurs, la libération d'acides gras à chaîne courte, tel que le butyrate, provoque l'absorption d'eau couplée à une absorption d'ions sodium au niveau du côlon, ce qui permet d'augmenter l'effet antidiarrhé. De plus, le butyrate est un substrat énergétique des colonocytes.

Les fibres de l'enveloppe externe de pois sont composées de 68% de cellulose, 25% d'hémicellulose et 7% de lignine. Elles sont constituée d'une fraction soluble de 10 % et d'une fraction insoluble de 90%. Elles ont, d'une part, un effet sur la capacité de rétention d'eau dans l'intestin et, d'autre part, un effet mécanique, lors du transit gastro-intestinal.

Les fibres d'inuline sont des fibres solubles, présentes dans de nombreux végétaux, tels que les asperges, les artichauts, les oignons, le blé ou la chicorée, par exemple. Les fibres d'inuline ne sont pas digérées dans le petit intestin. Elles sont fermentées dans le côlon. Les principaux effets des fibres d'inuline, sur le système digestif, sont, une diminution de la durée du transit intestinal, une diminution du taux de glycémie, une diminution de la teneur en lipides dans le sang, une diminution du pH dans le côlon, une diminution du phénomène de constipation et un effet bifidogène, par exemple. Ainsi, les fibres d'inuline peuvent être fermentées par les bifidobactéries, ce qui a pour conséquence d'augmenter la concentration de ces bactéries au niveau de la flore intestinale et de diminuer la concentration des entérobactéries, notamment les *Clostridiae,* au niveau de la flore intestinale.

La composition selon la présente invention comprend 1-5 % de mélange de fibres, 15-30 % de protéines,40-65 % de carbohydrates, 15-20 % de lipides, 1-2 % de vitamines et/ou 0,3-5 % de sels minéraux.

Cette composition peut être destinée à la nutrition entérale, par exemple. Elle présente un bon équilibre entre les fibres alimentaires solubles et les fibres alimentaires insolubles. De plus, cette composition peut être facilement administrée par voie entérale, soit par gravité, avec un débit régulier adapté à une bonne administration des nutriments, soit par un système de pompe. En effet, d'une part, si le débit est trop lent, on perd la synergie des aliments, constituant la composition destinée à la nutrition entérale et, d'autre part, si le débit est trop rapide, on provoque des troubles d'absorption et de tolérance.

Cette composition destinée à la nutrition entérale peut être une composition qui comprend un mélange de fibres présentant une proportion de 45-55% de fraction soluble et de 45-55% de fraction insoluble, par exemple. Cette proportion permet de tirer profit au mieux des avantages de chacune de ces deux fractions.

De plus, cette composition destinée à la nutrition entérale peut présenter une viscosité inférieure à 12 cp, par exemple. On peut mesurer la force de cisaillement à l'aide d'un viscosimètre type Rhéomate et ainsi calculer à partir de cette valeur le taux de viscosité, par exemple.

La composition nutritive selon la présente invention est décrite plus en détails à l'aide des données physico-chimiques ci-après et des exemples d'application ci-après.

### Test 1: Analyse physico-chimique d'une composition nutritive à base de fibres internes de pois, de fibres d'enveloppe externe de pois et d'inuline

On prépare une composition nutritive à base de fibres, selon la présente invention.

Pour ce faire, on mélange dans de l'eau déminéralisée à 65-70° C, 5 g/l de fibres internes de pois, 5 g/l de fibres d'enveloppe externe de pois et 5 g/l d'inuline.

On effectue une dispersion de ce mélange pendant 5 min, on le passe au travers d'un broyeur colloïdal, puis on le stocke dans une cuve sous agitation.

Parrallèlement, on prépare une pré-émulsion en mélangeant 39 g/l d'un mélange lipidique avec1,4 g/l d'un émulsifiant, le stéarate de glycérol.

On mélange ensuite cette pré-émulsion avec le mélange de fibres. Pour ce faire, on la passe au travers du broyeur colloïdal.

On obtient ainsi une émulsion que l'on refroidit à 60° C.

Après cette étape d'émulsification, on ajoute 37,5 g/l d'un mélange protéique, 125 g/l de glucides, ainsi que 300 mg/l d'un mélange de différents sels minéraux, de manière à réaliser une préparation homogène.

On prépare une solution aqueuse de vitamines, en mélangeant 2 g/l de vitamines dans de l'eau déminéralisée à 25° C.

On ajoute cette solution aqueuse de vitamines à la préparation.

On obtient une composition nutritive, selon la présente invention, dont on ajuste le pH à 7,1.

On traite thermiquement cette composition nutritive à 150° C, pendant 6 sec. Puis on la stocke à 6° C.

Après stockage pendant un mois à température ambiante, on mesure la granulométrie, la viscosité, la texture ainsi que la stabilité de la composition nutritive. De plus, on effectue une évaluation gustative de la composition nutritive.

L'ensemble de ces mesures sont mentionnées dans le tableau I ci-après.

**Tableau I**

| **Mesures** | |
|---|---|
| granulométrie | < 50 µm |
| viscosité (composition 1,5%) | 6 cp |
| texture | crémeuse |
| évaluation gustative | neutre |
| stabilité (mesure du dépôt après stockage d'un mois à température ambiante) | bonne |

Les mesures mentionnées au tableau I mettent ainsi en évidence le fait que la composition selon la présente invention présente des caractères très intéressants pour son utilisation dans le domaine de la nutrition entérale. En effet, cette composition du fait de sa faible viscosité permet une bonne utilisation par gravité. Par ailleurs, cette composition présente une très bonne stabilité. Après un mois de conservation à température ambiante, on ne note la présence d'aucun dépôt.

### Exemple 1

On prépare une composition nutritive selon la présente invention, destinée à la nutrition entérale.

Pour ce faire, on prépare une composition de la manière telle que décrite au test 1.

On répartit, en ambiance stérile, cette composition dans des poches en plastique de 200 ml que l'on ferme hermétiquement, avant de les stocker à 10° C.

La composition contenue dans ces poches est ensuite administrée par voie entérale, par gravité, aux malades. Du fait de sa viscosité adaptée, cette composition présente un débit régulier adapté à une bonne administration des nutriments.

### Exemple 2

On prépare une crème dessert, enrichie en fibres.

Pour ce faire, dans un mélangeur, on introduit, sous agitation, dans 20 litres d'eau déminéralissée à 70° C, un mélange de fibres constitué de 1,03 kg de fibres internes de pois, 0,55 kg de fibres d'enveloppe externe de pois et 0,55 kg d'inuline. On laisse ce mélange de fibres s'hydrater pendant environ 5 min, sous agitation. On stocke alors ce mélange de fibres à température ambiante.

Puis, on prépare dans un mélangeur une composition contenant10 litres d'eau déminéralisée à 70° C, 0,3 kg de stéarate de glycérol, 2,13 kg d'huile de beurre et 5,95 kg de lait en poudre écrémé.

La composition est ensuite broyée dans un moulin colloïdal, de manière à réaliser une pré-émulsion.

Toujours sous agitation, on mélange 5,95 kg de lait en poudre écrémé dans 3 litres d'eau déminéralisée chauffée à 70° C que l'on incorpore à la pré-émulsion, dans laquelle on a préalablement ajouté le mélange de fibres hydraté.

On ajoute à l'ensemble 24 litres d'eau déminéralisée chauffée à 70° C, sous agitation, puis 0,12 kg de carraghénate, 6,5 kg de saccharose, 0,65 kg de sirop de glucose, 1,7 kg d'amidon modifié, 6,25 kg de protéines de lait, 76 g de chlorure de magnésium, 5,4 g de sulfate de fer, 4 g de sulfate de zinc, 55 g de β-carotène, 0,16 kg d'arôme vanille, 20 g de mélange vitaminé, 40 g d'ascorbate de sodium, 0,65 kg de syrop de glucose déshydraté et 0,66 kg de phosphate disodique.

On récupère alors l'extrait sec que l'on ajuste à 29 g pour 100 g d'eau déminéralisée.

On dégaze ensuite le produit à - 500 mbars et on le stérilise dans un stérilisateur tubulaire, à 150° C pendant 7 secondes. On refroidit ensuite la crème dessert, ainsi réalisée, à 17° C et on la conditionne dans des pots en plastique de 125 g, hermétiquement fermés.

### Exemple 3

On prépare une barre céréalière à la pomme, enrichie en fibres.

Pour ce faire, on chauffe à 40° C un mélange contenant 200 g de lécithine de soja, 3,7 kg d'huile de tournesol et 3,7 kg d'huile de soja.

On ajoute à ce mélange d'huiles un mélange dont la température est de 90° C et qui contient 10,5 kg de sirop d'oligofructose, 9,6 kg de sirop de glucose et 3 kg de fructose.

On mélange l'ensemble ainsi obtenu jusqu'à une température de 75° C.

On ajoute ensuite 5,7 kg de protéines de lait, 6,25 kg de fibres internes de pois, 3 kg d'inuline, 545 g de carbonate de calcium, 1,5 kg de poudre de pomme, 3 kg de pommes déshydratées, 145,1 g de vitamines, 500 g de gélatine, 1,5 kg d'arôme de pomme, 16 kg d'un mélange de protéines extrudées, 10 kg de graines de soja et 5 kg de germes de blé.

Ce mélange est alors compressé entre deux rouleaux cannelés en rotation afin de former une bande continue de produit. Cette bande est refroidie par le passage dans un tunnel de refroidissement ventilé pour être enfin découpée en barres individuelles de 13 mm d'épaisseur, de 60 mm de large et de 90 mm de long.

On conditionne chaque barre dans un sachet, hermétiquement fermé.

## Revendications

1. Composition nutritive à base de fibres, comprenant un mélange de fibres constitué de fibres internes de pois, de fibres d'enveloppe externe de pois et d'inuline,
dans laquelle le mélange de fibres contient , 20-50 % de fibres internes de pois, 20-40 % de fibres d'enveloppe externe de pois et 20-60 % d'inuline, ladite composition comprenant, 1-5 % de mélange de fibres, 15-30 % de protéines,40-65 % de carbohydrates, 15-20 % de lipides, 1-2 % de vitamines et/ou 0,3-5% de sels minéraux.

2. Composition selon la revendication 1, **caractérisée en ce qu'**il s'agit d'une composition destinée à la nutrition entérale.

3. Composition selon la revendication 1, **caractérisée en ce que** le mélange de fibres présente une proportion de 45-55% de fraction soluble et de 45-55% de fraction insoluble.

## Patentansprüche

1. Nahrungszusammensetzung auf Basis von Fasern, welche umfasst, eine Mischung von Fasern, die aus inneren Erbsenfasem, Erbsenaußenhüllfasern und Inulin gebildet ist, wobei die Mischung von Fasern 20-50 % an inneren Erbsenfasern, 20-40% an Erbsenaußenhüllfasern und 20-60 % an Inulin enthält, wobei die Zusammensetzung umfasst, 1-5 % an Mischung von Fasern, 15-30 % an Proteinen, 40-65% an Kohlenhydraten, 15-20 % an Lipiden, 1-2 % an Vitaminen und/oder 0,3-5 % an Mineralsalzen.

2. Zusammensetzung nach Anspruch 1, **dadurch gekennzeichnet, dass** es sich um eine zur enteralen Ernährung vorgesehene Zusammensetzung handelt.

3. Zusammensetzung nach Anspruch 1, **dadurch gekennzeichnet, dass** die Mischung von Fasern ein Verhältnis von 45-55 % an löslicher Fraktion und von 45-55 % an unlöslicher Fraktion aufweist.

## Claims

1. Nutritional composition based on fibres, comprising a mixture of fibres formed of pea internal fibres, pea external hull fibres, and inulin, wherein the mixture of fibres contains 20-50 % of pea internal fibres, 20-40% of pea external hull fibres, and 20-60 % of inulin, said composition comprising 1-5 % of mixture of fibres, 15-30 % of proteins, 40-65% of carbohydrates, 15-20 % of lipids, 1-2 % of vitamins and/or 0,3-5 % of mineral salts.

2. Composition according to claim 1, **characterised in that** it is a composition provided for the enteral nutrition.

3. Composition according to claim 1, **characterised in that** the mixture of fibres has a proportion of 45-55 % of soluble fraction and of 45-55 % of insoluble fraction.
